# EUROPEAN PATENT SPECIFICATION

(11) **EP 4 181 324 B1**
(45) Date of publication and mention of the grant of the patent: **14.02.2024**
(21) Application number: 22195922.4
(22) Date of filing: 15.09.2022
(51) Int. Cl.: H01R 13/52, H01R 13/443

(54) **CONNECTOR ASSEMBLY AND WATERPROOF CAP**
VERBINDERANORDNUNG UND WASSERDICHTE KAPPE
ENSEMBLE CONNECTEUR ET CAPUCHON ÉTANCHE À L'EAU

(30) Priority: 12.11.2021 JP 2021184873
(43) Date of publication of application: 17.05.2023
(73) Proprietor: Japan Aviation Electronics Industry, Ltd., Tokyo 150-0043 (JP)
(72) Inventor: SHIMOMAKI, Yuta, Tokyo, 150-0043 (JP)
(74) Representative: Qip Patentanwälte Dr. Kuehn & Partner mbB

(56) References cited:
- CN-A- 110 299 627
- CN-B- 101 499 582
- DE-A1-102014 113 324
- JP-B1- 5 925 938
- US-A1- 2012 181 317
- US-B1- 6 227 717

## Description

### BACKGROUND OF THE INVENTION

The present invention relates to a connector assembly, particularly to a connector assembly in which a waterproof cap closes an insertion port of a housing of an electronic device, into which insertion port, a counter connector is inserted in a fitting process with a connector.

The present invention also relates to a waterproof cap that is detachably attachable to a housing of an electronic device and closes an insertion port.

Conventionally, there have been known a structure in which, in an electronic device in which a connector for connection with an external device is provided in a housing, and an insertion port for inserting a counter connector is formed near the connector in the housing, a cap covers the insertion port of the housing in order to prevent water from entering from the outside to the inside of the housing when the connector is not used.

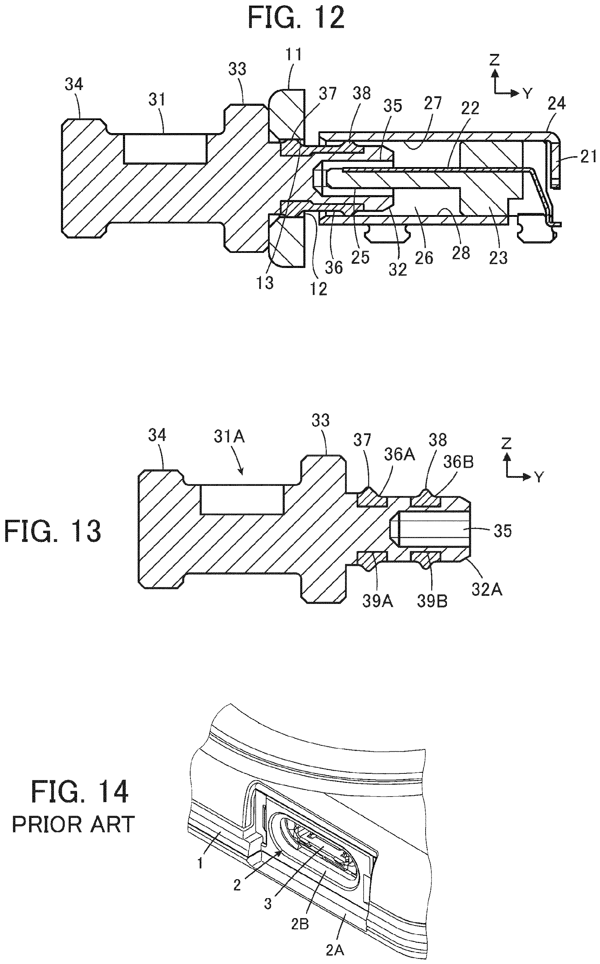

For example, JP 2013-98078 A discloses a mobile terminal in which an insertion port 2 is provided to a housing 1, and a connector 3 is disposed on the inner side from the insertion port 2 as shown in FIG. 14. A counter connector (not shown) is inserted into the insertion port 2 and fitted with the connector 3, whereby the counter connector can be connected to an external device (not shown) via the connector 3. The insertion port 2 includes an opening portion 2A of rectangular shape exposed on a front surface of the housing 1 and a communication hole 2B of oval shape continuing from the opening portion 2A and extending to the inside of the housing 1.

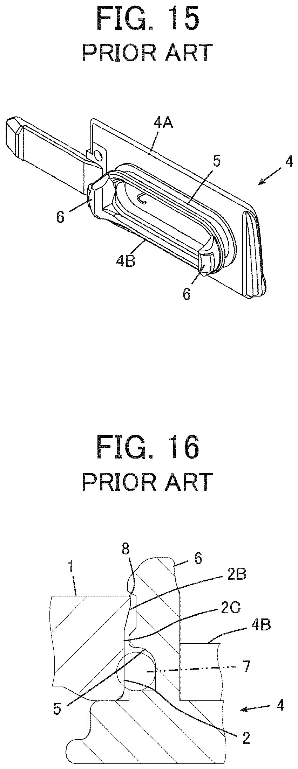

For waterproofing, a lid member 4 shown in FIG. 15 is detachably attached to the insertion port 2. The lid member 4 includes a front plate portion 4A of rectangular shape covering the opening portion 2A of the insertion port 2 and an insertion portion 4B formed on and protruding from an inner surface of the front plate portion 4A and inserted into the communication hole 2B of the insertion port 2. A recessed portion 5 is formed over an entire periphery of the insertion portion 4B, and a pair of claw portions 6 are separately formed on opposite end portions of the insertion portion 4B in a longitudinal direction.

As shown in FIG. 16, when an O-ring 7 is fitted in the recessed portion 5, and the insertion portion 4B is inserted into the communication hole 2B of the housing 1, the O-ring 7 contacts an inner peripheral surface 2C of the communication hole 2B while being pressurized by the inner peripheral surface 2C, whereby water is stopped at the insertion port 2. Further, the claw portion 6 is inserted toward the inner side of the housing 1 than the inner peripheral surface 2C of the communication hole 2B, and caught by an edge portion 8 formed on the inner side of the inner peripheral surface 2C of the communication hole 2B, resulting in prevention of the lid member 4 from falling off the insertion port 2.

When the lid member 4 is attached to or detached from the insertion port 2, in order to prevent a situation where the claw portion 6 scratches the inner peripheral surface 2C of the communication hole 2B so that the inner peripheral surface 2C is chipped away, and a water stop effect by the O-ring 7 deteriorates, the edge portion 8 catching the claw portion 6 is formed to protrude toward the inner side of the housing 1 than the inner peripheral surface 2C of the communication hole 2B and toward the center side of the communication hole 2B from the inner peripheral surface 2C.

However, in order to prevent the lid member 4 from falling off the insertion port 2, the pair of claw portions 6 of the lid member 4 need to be inserted to the inner side of the housing 1 than the inner peripheral surface 2C of the communication hole 2B and caught by the edge portion 8, and in order to prevent the claw portions 6 from scratching the inner peripheral surface 2C of the communication hole 2B, the edge portion 8 needs to be formed to protrude toward the inner side of the housing 1 than the inner peripheral surface 2C of the communication hole 2B and toward the center side of the communication hole 2B from the inner peripheral surface 2C, and there is a problem in that the configuration of the insertion port 2 of the housing 1 and the lid member 4 becomes complicated.

Further, there is also a problem in that a space where the claw portion 6 is caught by the edge portion 8 needs to be provided between the insertion port 2 of the housing 1 and the connector 3.

Another connector assembly of interest is known from US 2012/181317 A1, disclosing the preamble of claim 1.

### SUMMARY OF THE INVENTION

The present invention has been made to overcome such conventional problems and aims at providing a connector assembly with a simple structure, without the need for a large space, and capable of preventing water from penetrating from an insertion port of a housing of an electronic device.

The present invention also aims at providing a waterproof cap for preventing water from penetrating from an insertion port of a housing of an electronic device.

A waterproof cap according to the present invention is one that is detachably attached from an outside of a housing of an electronic device to the housing and closes an insertion port, the housing accommodating a connector fitted to a counter connector along a fitting direction and having the insertion port into which the counter connector is inserted, the waterproof cap comprises:
a cap body extending in the fitting direction,
a first protruding portion disposed on an outer peripheral surface of the cap body, continuously surrounding an entire periphery of the outer peripheral surface while protruding from the outer peripheral surface in a plane orthogonal to the fitting direction, and made of an elastic material; and
a second protruding portion disposed on the outer peripheral surface on a front end side of the cap body in the fitting direction from a position at which the first protruding portion is disposed, protruding from the outer peripheral surface in a direction orthogonal to the fitting direction, and made of an elastic member,
wherein when the waterproof cap is attached to the housing, the first protruding portion is press-fitted to the insertion port of the housing and contacts an entire periphery of an inner peripheral surface of the insertion port while being elastically compressed, and the second protruding portion is inserted into the connector and contacts at least two inner surfaces of the connector facing each other while being elastically compressed.

### BRIEF DESCRIPTION OF THE DRAWINGS

FIG. 1 is a perspective view showing a connector assembly according to Embodiment 1 of the present invention.
FIG. 2 is a cross-sectional side view showing part of a housing of an electronic device and a connector that are used in Embodiment 1.
FIG. 3 is a front view showing part of the housing of the electronic device used in Embodiment 1.
FIG. 4 is a cross-sectional view taken along line A-A in FIG. 3.
FIG. 5 is a perspective view showing a waterproof cap used in Embodiment 1 when viewed obliquely from the rear.
FIG. 6 is a perspective view showing the waterproof cap used in Embodiment 1 when viewed obliquely from the front.
FIG. 7 is a front view showing the waterproof cap used in Embodiment 1.
FIG. 8 is a plan view showing the waterproof cap used in Embodiment 1.
FIG. 9 is a side view showing the waterproof cap used in Embodiment 1.
FIG. 10 is a cross-sectional view taken along line B-B in FIG. 8.
FIG. 11 is a perspective view showing the connector assembly according to Embodiment 1 with the waterproof cap being attached to the housing of the electronic device.
FIG. 12 is a cross-sectional side view showing the connector assembly according to Embodiment 1 with the waterproof cap being attached to the housing of the electronic device.
FIG. 13 is a cross-sectional side view showing a waterproof cap used in Embodiment 2.
FIG. 14 is a partial perspective view showing a housing of a conventional mobile terminal.
FIG. 15 is a perspective view showing a lid member used in the conventional mobile terminal.
FIG. 16 is a partial cross-sectional view showing a state where the lid member is attached to the housing of the conventional mobile terminal.

### DETAILED DESCRIPTION OF THE INVENTION

Embodiments of the present invention are described below with reference to the accompanying drawings.

### Embodiment 1

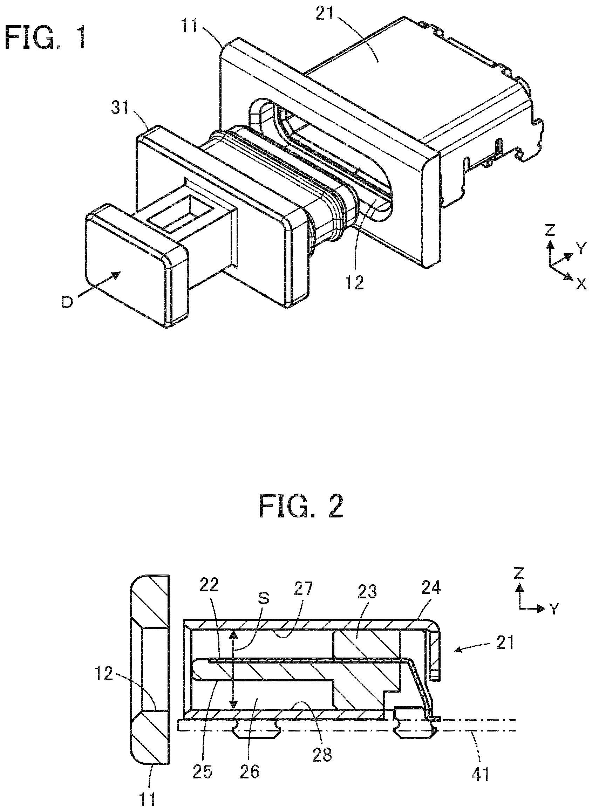

FIG. 1 shows a perspective view of a connector assembly according to Embodiment 1. The connector assembly includes a housing 11 of an electronic device, a connector 21 accommodated in the housing 11, and a waterproof cap 31 detachably attached to the housing 11.

The housing 11 of the electronic device is provided with an insertion port 12 of oval shape extending in a predetermined direction, and the connector 21 is disposed at a position facing the insertion port 12 from the inside of the housing 11. In addition, the connector 21 is to be fitted with a counter connector (not shown) along a fitting direction D, and the counter connector is inserted from the outside of the housing 11 into the housing 11 through the insertion port 12 to be fitted with the connector 21. Note that part of the housing 11, at which part the insertion port 12 is provided, extends in a direction orthogonal to the fitting direction D.

When a counter connector (not shown) is not fitted with the connector 21 and the connector 21 is not used, the waterproof cap 31 is attached to the housing 11 from the outside of the housing 11 to close the insertion port 12 in order to prevent water from entering the inside of the housing 11 through the insertion port 12.

For convenience, the direction in which a counter connector (not shown) is fitted with the connector 21 along the fitting direction D is referred to as "+Y direction," the direction orthogonal to the Y direction and in which the insertion port 21 of oval shape of the housing 11 extends is referred to as "X direction," and the direction perpendicular to an XY plane is referred to as "Z direction."

As shown in FIG. 2, the connector 21 is mounted on a circuit board 41 disposed in the housing 11 of the electronic device, and includes at least one connection terminal 22, an insulator 23 that retains the connection terminal 22, and a metal shell 24 that encloses the connection terminal 22 and the insulator 23.

The insulator 23 includes a tongue portion 25 projecting in the -Y direction along the fitting direction D, and a -Y directional end portion of the connection terminal 22 is disposed on a surface of the tongue portion 25 and exposed in the +Z direction. A +Y directional end portion of the connection terminal 22 projects in the +Y direction from the insulator 23 and is connected to a connection pad (not shown) disposed on a surface of the circuit board 41, and a Y directional center portion of the connection terminal 22 is embedded in the insulator 23.

The metal shell 24 has a tubular shape and forms a counter connector accommodating portion 26 of recess shape around the tongue portion 25 of the insulator 23. The counter connector accommodating portion 26 is a space for accommodating part of a counter connector (not shown) when the counter connector is fitted with the connector 21 along the fitting direction D.

The connector 21 is disposed on the +Y direction side of and near the insertion port 12 of the housing 11, and the counter connector accommodating portion 26 of the metal shell 24 is disposed to face the insertion portion 12 of the housing 11 from the inside of the housing 11.

Note that the metal shell 24 of tubular shape has a pair of inner surfaces 27 and 28 facing each other in the Z direction with the counter connector accommodating portion 26 being sandwiched therebetween, and these inner surfaces 27 and 28 are disposed with a gap S therebetween in the Z direction.

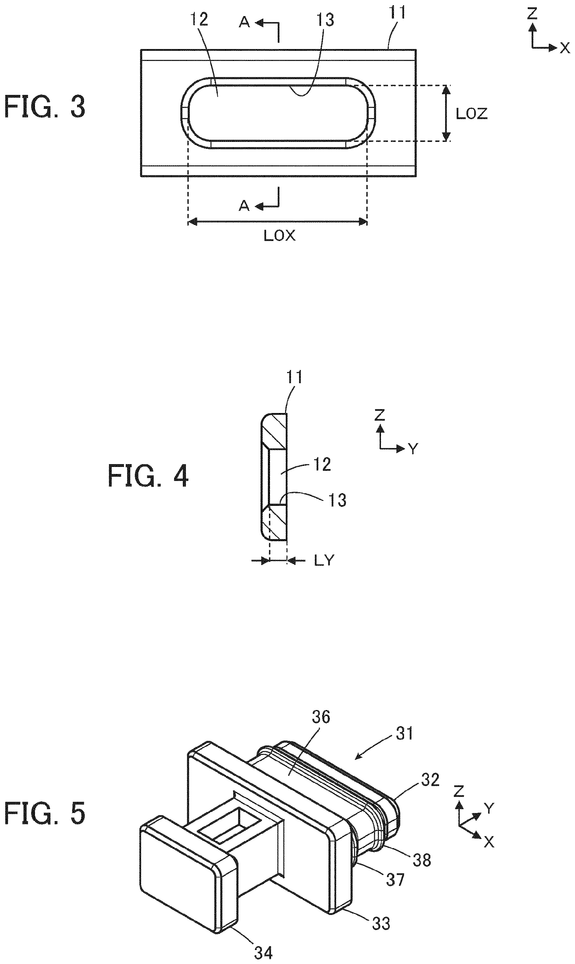

As shown in FIG. 3, the insertion port 12 of the housing 11 has an inner peripheral surface 13 of oval shape having an X directional length of L0X and a Z directional length of L0Z.

In addition, as shown in FIG. 4, the inner peripheral surface 13 of the insertion port 12 has a predetermined length LY along the Y direction.

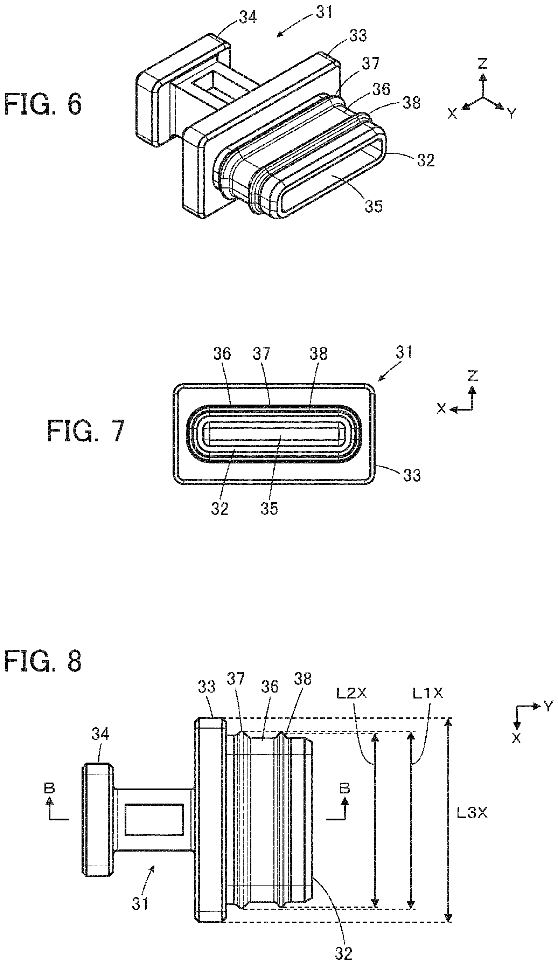

The structure of the waterproof cap 31 is shown in FIGS. 5 and 6. The waterproof cap 31 includes a cap body 32 extending in the Y direction, a flange portion 33 joined to a -Y directional end portion, that is, a rear end, of the cap body 32, and further a knob portion 34 joined to a rear end of the flange portion 33.

The cap body 32 has a flattened oval shape corresponding to the insertion port 12 of oval shape of the housing 11 and extending in the X direction when viewed in the Y direction, and is provided in its interior with a recessed portion 35 recessed from a +Y directional end portion, that is, a front end, of the cap body 32 to a rear portion of the cap body 32.

An elastic member 36 is attached to the cap body 32 so as to continuously surround an entire periphery of an outer peripheral surface of the cap body 32. The elastic member 36 includes a first protruding portion 37 situated at a rear portion on the -Y direction side of the cap body 32, and a second protruding portion 38 situated on the +Y directional-end-portion side of the cap body 32 from the first protruding portion 37. The first protruding portion 37 and the second protruding portion 38 both continuously surround the entire periphery of the outer peripheral surface of the cap body 32 while protruding from the outer peripheral surface of the cap body 32 toward the outside of the cap body 32 in an XZ plane orthogonal to the Y direction, and are integrally formed.

As shown in FIG. 7, the flange portion 33 extends longer than the cap body 32 in the X direction and the Z direction in an XZ plane orthogonal to the Y direction. The flange portion 33 defines a position of the waterproof cap 31 in the Y direction with respect to the housing 11 by abutting an outer surface of the housing 11 when the cap body 32 is inserted into the insertion port 12 of the housing 11 and the waterproof cap 31 is attached to the housing 11 from the outside of the housing 11.

As shown in FIG. 8, when viewed in the Z direction, a maximum distance L1X between opposite ends of the first protruding portion 37 continuously surrounding the entire periphery of the outer peripheral surface of the cap body 32 is set to be larger than a maximum distance L2X between opposite ends of the second protruding portion 38 continuously surrounding the entire periphery of the outer peripheral surface of the cap body 32.

In addition, when viewed in the Z direction, a maximum dimension L3X of the flange portion 33 is set to be larger than the maximum distance L1X between the opposite ends of the first protruding portion 37 continuously surrounding the entire periphery of the outer peripheral surface of the cap body 32.

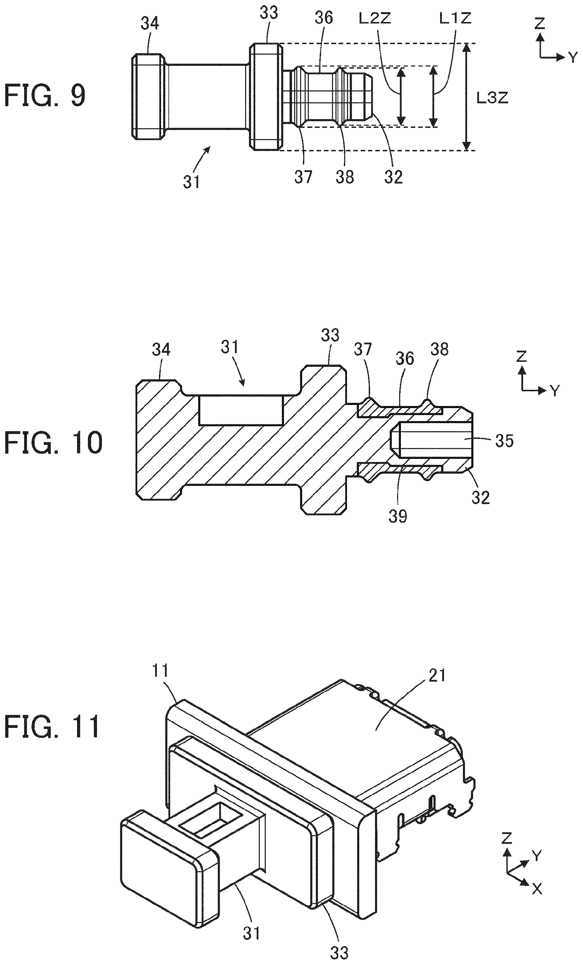

Similarly, as shown in FIG. 9, when viewed in the X direction, a maximum distance L1Z between opposite ends of the first protruding portion 37 continuously surrounding the entire periphery of the outer peripheral surface of the cap body 32 is set to be larger than a maximum distance L2Z between opposite ends of the second protruding portion 38 continuously surrounding the entire periphery of the outer peripheral surface of the cap body 32.

In addition, when viewed in the X direction, a maximum dimension L3Z of the flange portion 33 is set to be larger than the maximum distance L1Z between the opposite ends of the first protruding portion 37 continuously surrounding the entire periphery of the outer peripheral surface of the cap body 32.

Note that there is a relation in that the X directional length L0X of the inner peripheral surface 13 of the insertion port 12 of the housing 11 shown in FIG. 3 is larger than the maximum distance L2X between the opposite ends of the second protruding portion 38, slightly smaller than the maximum distance L1X between the opposite ends of the first protruding portion 37, and smaller than the maximum dimension L3X of the flange portion 33.

Similarly, there is a relation in that the Z directional length L0Z of the inner peripheral surface 13 of the insertion port 12 of the housing 11 shown in FIG. 3 is larger than the maximum distance L2Z between the opposite ends of the second protruding portion 38, slightly smaller than the maximum distance L1Z between the opposite ends of the first protruding portion 37, and smaller than the maximum dimension L3Z of the flange portion 33.

Since the X directional length L0X and the Z directional length L0Z of the inner peripheral surface 13 of the insertion port 12 are respectively slightly smaller than the maximum distances L1X and L1Z between the opposite ends of the first protruding portion 37, when the first protruding portion 37 disposed on the outer peripheral surface of the cap body 32 is press-fitted to the insertion port 12 of the housing 11 in the Y direction, the first protruding portion 37 can contact the entire periphery of the inner peripheral surface 13 of the insertion port 12 while being elastically compressed.

The gap S between the pair of inner surfaces 27 and 28 facing each other in the Z direction with the counter connector accommodating portion 26 of the metal shell 24 being sandwiched therebetween as shown in FIG. 2 is set to be slightly smaller than the maximum distance L2Z between the opposite ends of the second protruding portion 38 when viewed in the X direction. Thus, when the +Y directional end portion of the cap body 32 is inserted into the counter connector accommodating portion 26 of the metal shell 24, the second protruding portion 38 can contact the pair of inner surfaces 27 and 28 of the metal shell 24 while being elastically compressed.

The knob portion 34 joined to the rear end of the flange portion 33 is to be held by a user when the waterproof cap 31 is attached to the housing 11 and when the waterproof cap 31 attached to the housing 11 is pulled out.

The cap body 32, the flange portion 33, and the knob portion 34 of the waterproof cap 31 as above are integrally formed from an insulating resin, and the elastic member 36 including the first protruding portion 37 and the second protruding portion 38 is made of a rubber material that is an elastic material.

As shown in FIG. 10, a groove 39 is formed at the outer peripheral surface of the cap body 32 so as to continuously surround the entire periphery of the outer peripheral surface, and the elastic member 36 is fitted or molded in the groove 39 to be thereby attached to the cap body 32.

Note that the recessed portion 35 of the cap body 32 is disposed at a position where the recessed portion 35 overlaps the second protruding portion 38 of the elastic member 36 in the Y direction.

Next, the connector assembly in a state where the waterproof cap 31 is attached to the housing 11 is shown in FIG. 11. The waterproof cap 31 is attached to the housing 11 from the outside of the housing 11 along the Y direction, the flange portion 33 of the waterproof cap 31 abuts the outer surface of the housing 11, and the insertion port 12 of the housing 11 is covered with the flange portion 33 and cannot be seen from the outside of the housing 11.

At this time, as shown in FIG. 12, the cap body 32 of the waterproof cap 31 is inserted into the insertion port 12 of the housing 11, and the first protruding portion 37 of the elastic member 36 disposed on the outer peripheral surface of the cap body 32 is press-fitted to the insertion port 12. Since the X directional length L0X and the Z directional length L0Z of the inner peripheral surface 13 of the insertion port 12 are respectively slightly smaller than the maximum distances L1X and L1Z between the opposite ends of the first protruding portion 37, the first protruding portion 37 contacts the entire periphery of the inner peripheral surface 13 of the insertion port 12 while being elastically compressed, thereby preventing water from entering the inside of the housing 11 through the insertion port 12.

Since the inner peripheral surface 13 of the insertion port 12 has the predetermined length LY along the Y direction as shown in FIG. 4, the first protruding portion 37 contacts the inner peripheral surface 13 of the insertion port 12 in the range of this length LY, thereby preventing water from entering. In other words, even if the flange portion 33 of the waterproof cap 31 does not abut the outer surface of the housing 11, when the first protruding portion 37 contacts the inner peripheral surface 13 of the insertion port 12 in the range of the predetermined length LY, a waterproof effect can be obtained, and reliable waterproofness can be provided.

As shown in FIG. 12, when the waterproof cap 31 is attached to the housing 11, the +Y directional end portion, that is, the front end, of the cap body 32 is inserted to the inside of the counter connector accommodating portion 26 of the metal shell 24 of the connector 21 disposed inside the housing 11.

At this time, since the recessed portion 35 recessed from the front end of the cap body 32 to the rear end of the cap body 32 is formed inside the cap body 32, the tongue portion 25 projecting in the -Y direction in the counter connector accommodating portion 26 of the connector 21 and the -Y directional end portion of the connection terminal 22 disposed on the surface of the tongue portion 25 are accommodated in the recessed portion 35 of the cap body 32. Therefore, the waterproof cap 31 can be attached to the housing 11 while the front end of the cap body 32 does not abut the tongue portion 25 and the connection terminal 22.

Note that the recessed portion 35 of the cap body 32 is formed to have a size such that the recessed portion 35 faces the tongue portion 25 and the -Y directional end portion of the connection terminal 22 that are accommodated inside the recessed portion 35 across a gap in each of the Y direction, the Z direction, and the X direction, and does not contact the tongue portion 25 and the connection terminal 22.

In addition, the front end of the cap body 32 is inserted to the inside of the counter connector accommodating portion 26 of the metal shell 24, whereby the second protruding portion 38, situated on the front end side of the cap body 32, of the elastic member 36 disposed on the outer peripheral surface of the cap body 32 is also inserted to the inside of the counter connector accommodating portion 26.

Here, since the gap S between the pair of inner surfaces 27 and 28, facing each other in the Z direction, of the metal shell 24 is set to be slightly smaller than the maximum distance L2Z between the opposite ends of the second protruding portion 38 when viewed in the X direction, the second protruding portion 38 contacts the inner surfaces 27 and 28 of the metal shell 24 while being elastically compressed and receives a pressing force from the inner surfaces 27 and 28 of the metal shell 24.

Therefore, a holding force of the waterproof cap 31 to hold the housing 11 is improved, and the waterproof cap 31 can be effectively prevented from falling off the housing 11.

Further, since the second protruding portion 38 contacts the pair of inner surfaces 27 and 28 of the metal shell 24 of the connector 21, a connector assembly that has a simple configuration without forming a dedicated part or portion for receiving the second protruding portion 38 and does not require a large space can be achieved.

When a counter connector (not shown) is connected to the connector 21 in the state where the waterproof cap 31 is attached to the housing 11 so that water is prevented from entering the inside of the housing 11 through the insertion portion 12, the knob portion 34 of the waterproof cap 31 is held, and the waterproof cap 31 is pulled out from the housing 11 toward the -Y direction, whereby the insertion port 12 is released. Therefore, the counter connector can be fitted with the connector 21 disposed inside the housing 11 through the insertion port 12.

While in Embodiment 1 above, the second protruding portion 38 of the waterproof cap 31 contacts the pair of inner surfaces 27 and 28, facing each other in the Z direction, of the metal shell 24 of the connector 21, the invention is not limited thereto, and for example, the second protruding portion 38 may be configured to contact a pair of inner surfaces 27 and 28, facing each other in the X direction, of the metal shell 24 of the connector 21.

It suffices if the second protruding portion 38 of the waterproof cap 31 contacts at least two surfaces, facing each other, of the metal shell 24 while being elastically compressed. In addition, the second protruding portion 38 is not necessarily required to contact the metal shell 24, and when the second protruding portion 38 contacts at least two surfaces, facing each other, of the inside of the connector 21, the holding force of the waterproof cap 31 can similarly be improved.

Since in Embodiment 1 above, the second protruding portion 38 of the waterproof cap 31 continuously surrounds the entire periphery of the outer peripheral surface of the cap body 32 while protruding from the outer peripheral surface of the cap body 32 toward the outside of the cap body 32, the second protruding portion 38 may be configured to contact not only the pair of inner surfaces 27 and 28 of the metal shell 24 but also the entire periphery of the inner peripheral surface of the metal shell 24 while being elastically compressed. Therefore, the holding force of the waterproof cap 31 is further improved.

In addition, when the second protruding portion 38 of the waterproof cap 31 contacts only the pair of the inner surfaces 27 and 28, facing each other in the Z direction, of the metal shell 24, the second protruding portion 38 need not continuously surround the entire periphery of the outer peripheral surface of the cap body 32, and even with the second protruding portion formed only at portions, facing the +Z direction and the -Z direction, of the outer peripheral surface of the cap body 32, the holding force of the waterproof cap 31 can similarly be improved.

In addition, while the connector 21 has only the connection terminal 22 disposed on the +Z direction side surface of the tongue portion 25, the connection terminal 22 may be disposed on each of the +Z direction side surface and a -Z direction side surface of the tongue portion 25. Even in an electronic device in which the connector as above is disposed inside the housing 11, the waterproof cap 31 is attached to the housing 11, thereby preventing water from entering the inside of the housing 11 through the insertion port 12.

### Embodiment 2

While in Embodiment 1 above, the elastic member 36 in which the first protruding portion 37 and the second protruding portion 38 are integrally formed is attached to the outer peripheral surface of the cap body 32 of the waterproof cap 31, the invention is not limited thereto.

FIG. 13 is a cross-sectional view of a waterproof cap 31A used in a connector assembly according to Embodiment 2. The waterproof cap 31A includes a cap body 32A instead of the cap body 32 in the waterproof cap 31 used in Embodiment 1, and instead of the elastic member 36, a first elastic member 36A and a second elastic member 36B are attached to the cap body 32A. The waterproof cap 31A otherwise has the same configuration as the waterproof cap 31 in Embodiment 1.

The cap body 32A is provided with a first groove 39A continuously surrounding an entire periphery of an outer peripheral surface of a rear portion, close to the flange portion 33, of the cap body 32A, and a second groove 39B continuously surrounding an entire periphery of an outer peripheral surface of the cap body 32A at a position of a +Y direction end portion side of the cap body 32A from the first groove 39A.

The first elastic member 36A has a first protruding portion 37, is made of a rubber material, and is attached to the cap body 32A by being fitted in the first groove 39A. Similarly, the second elastic member 36B has a second protruding portion 38, is made of a rubber material, and is attached to the cap body 32A by being fitted in the second groove 39B.

Even when the first protruding portion 37 and the second protruding portion 38 are respectively formed at the dedicated first elastic member 36A and the dedicated second elastic member 36B as described above, as with Embodiment 1, water can be prevented from entering the inside of the housing 11 through the insertion port 12 of the housing 11, and a holding force of the waterproof cap 31A can be improved, and a connector assembly which has a simple configuration and does not require a large space can be achieved.

While the cap body 32, the flange portion 33, and the knob portion 34 of the waterproof cap 31 in Embodiment 1 above as well as the cap body 32A, the flange portion 33, and the knob portion 34 of the waterproof cap 31A in Embodiment 2 are made of an insulating resin, these members are configured not to directly contact the connection terminal 22 and the metal shell 24 of the connector 21 and thus can be made of a material having conductivity such as metal.

## Claims

1. A waterproof cap (31, 31A) that is detachably attachable from an outside of a housing (11) of an electronic device to the housing and closes an insertion port, said housing accommodating a connector (21) fitted to a counter connector along a fitting direction (D) and having the insertion port (12) into which the counter connector is inserted, the waterproof cap comprising:
a cap body (32, 32A) extending in the fitting direction,
a first protruding portion (37) disposed on an outer peripheral surface of the cap body, continuously surrounding an entire periphery of the outer peripheral surface while protruding from the outer peripheral surface in a plane orthogonal to the fitting direction, and made of an elastic material; and
wherein when the waterproof cap is attached to the housing, the first protruding portion (37) is press-fitted to the insertion port (12) of the housing and contacts an entire periphery of an inner peripheral surface of the insertion port while being elastically compressed,
**characterized in that** the waterproof cap further comprises a second protruding portion (38) disposed on the outer peripheral surface on a front end side of the cap body in the fitting direction from a position at which the first protruding portion is disposed, protruding from the outer peripheral surface in a direction orthogonal to the fitting direction, and made of an elastic member, wherein the second protruding portion (38) is configured to be inserted into the connector and contacts at least two inner surfaces (27, 28) of the connector facing each other while being elastically compressed.

2. The waterproof cap according to claim 1, wherein the cap body (32, 32A) includes a recessed portion (35) recessed from the front end of the cap body toward a rear portion of the cap body.

3. The waterproof cap according to claim 2, wherein the recessed portion (35) is disposed at a position where the recessed portion overlaps the second protruding portion (38) in the fitting direction.

4. The waterproof cap according to any one of claims 1-3,
wherein the cap body (32, 32A) is made of an insulating resin, and
wherein the first protruding portion and the second protruding portion are each made of a rubber material.

5. The waterproof cap according to claim 4, comprising an elastic member in which the first protruding portion (37) and the second protruding portion (38) are integrally formed.

6. The waterproof cap according to claim 4, comprising a first elastic member (36A) in which the first protruding portion (37) is formed, and a second elastic member (36B) which is separated from the first elastic member and in which the second protruding portion (38) is formed.

7. The waterproof cap according to any one of claims 1-6, wherein the second protruding portion (38) continuously surrounds the entire periphery of the outer peripheral surface of the cap body while protruding from the outer peripheral surface of the cap body in a plane orthogonal to the fitting direction.

8. The waterproof cap according to claim 7, wherein when viewed in a direction orthogonal to the fitting direction, a maximum distance (L1X, L1Z) between opposite ends of the first protruding portion (37) continuously surrounding the entire periphery of the outer peripheral surface of the cap body is larger than a maximum distance (L2X, L2Z) between opposite ends of the second protruding portion (38) continuously surrounding the entire periphery of the outer peripheral surface of the cap body.

9. The waterproof cap according to any one of claims 1-8, comprising
a flange portion (33) joined to a rear end of the cap body along the fitting direction and extending longer than the cap body in a direction orthogonal to the fitting direction.

10. The waterproof cap according to claim 9, wherein when viewed in a direction orthogonal to the fitting direction, a maximum dimension (L3X, L3Z) of the flange portion (33) is larger than a maximum distance (L1X, L1Z) between opposite ends of the first protruding portion (37) continuously surrounding the entire periphery of the outer peripheral surface of the cap body.

11. The waterproof cap according to claim 9 or 10, comprising
a knob portion (34) joined to a rear end of the flange portion (33) along the fitting direction.

12. A connector assembly comprising:
a connector (21) fitted to a counter connector along a fitting direction (D);
a housing (11) of an electronic device, the housing accommodating the connector and having an insertion port (12) into which the counter connector is inserted; and
a waterproof cap (31, 31A) according to any one of claims 1-11, detachably attached from an outside of the housing to the housing and used to close the insertion port.

13. The connector assembly according to claim 12,
wherein the connector (21) has at least one connection terminal (22) connected to a connection terminal of the counter connector when fitted with the counter connector, and
wherein the cap body (32, 32A) includes a recessed portion (35) recessed from the front end of the cap body toward a rear portion of the cap body and accommodating the at least one connection terminal of the connector.

14. The connector assembly according to claim 12 or 13,
wherein the connector (21) includes a fitting member (24) in which a counter connector accommodating portion (26) of recess shape for accommodating the counter connector is formed, and
wherein when the waterproof cap is attached to the housing, the second protruding portion (38) is inserted into the counter connector accommodating portion (26) of the fitting member and contacts at least two surfaces (27, 28) of the fitting member facing each other while being elastically compressed.

15. The connector assembly according to claim 14, wherein the fitting member is made of a metal shell (24).

## Patentansprüche

1. Wasserdichte Kappe (31, 31A), die abnehmbar von einer Außenseite eines Gehäuses (11) eines elektronischen Geräts an dem Gehäuse angebracht werden kann und eine Einführungsöffnung verschließt, wobei das Gehäuse einen Verbinder (21) aufnimmt, der an einem Gegenverbinder entlang einer Steckrichtung (D) angebracht ist und die Einführungsöffnung (12) aufweist, in die der Gegenverbinder eingeführt wird, wobei die wasserdichte Kappe umfasst:
einen Kappenkörper (32, 32A), der sich in der Steckrichtung erstreckt,
einen ersten vorstehenden Abschnitt (37), der an einer äußeren Umfangsfläche des Kappenkörpers angeordnet ist, kontinuierlich einen gesamten Umfang der äußeren Umfangsfläche umgibt, während er von der äußeren Umfangsfläche in einer Ebene orthogonal zur Steckrichtung vorsteht, und aus einem elastischen Material besteht; und
wobei, wenn die wasserdichte Kappe an dem Gehäuse angebracht ist, der erste vorstehende Abschnitt (37) in die Einführungsöffnung (12) des Gehäuses eingepresst ist und einen gesamten Umfang einer inneren Umfangsfläche der Einführungsöffnung berührt, während er elastisch zusammengedrückt wird,
**dadurch gekennzeichnet, dass** die wasserdichte Kappe ferner einen zweiten vorstehenden Abschnitt (38) umfasst, der an der äußeren Umfangsfläche an einer vorderen Endseite des Kappenkörpers in der Steckrichtung von einer Position aus angeordnet ist, an der der erste vorstehende Abschnitt angeordnet ist, der von der äußeren Umfangsfläche in einer Richtung senkrecht zur Steckrichtung vorsteht und aus einem elastischen Element besteht, wobei der zweite vorstehende Abschnitt (38) so konfiguriert ist, dass er in den Verbinder eingeführt wird und mindestens zwei Innenflächen (27, 28) des Verbinders berührt, die einander gegenüberliegen, während er elastisch zusammengedrückt wird.

2. Wasserdichte Kappe nach Anspruch 1, wobei der Kappenkörper (32, 32A) einen vertieften Abschnitt (35) aufweist, der vom vorderen Ende des Kappenkörpers zu einem hinteren Abschnitt des Kappenkörpers hin vertieft ist.

3. Wasserdichte Kappe nach Anspruch 2, wobei der vertiefte Abschnitt (35) an einer Stelle angeordnet ist, an der der vertiefte Abschnitt den zweiten vorstehenden Abschnitt (38) in der Steckrichtung überlappt.

4. Wasserdichte Kappe nach einem der Ansprüche 1-3,
wobei der Kappenkörper (32, 32A) aus einem isolierenden Harz hergestellt ist, und
wobei der erste vorstehende Teil und der zweite vorstehende Teil jeweils aus einem Gummimaterial hergestellt sind.

5. Wasserdichte Kappe nach Anspruch 4, umfassend ein elastisches Element, in dem der erste vorstehende Abschnitt (37) und der zweite vorstehende Abschnitt (38) einstückig ausgebildet sind.

6. Wasserdichte Kappe nach Anspruch 4, umfassend ein erstes elastisches Element (36A), in dem der erste vorstehende Abschnitt (37) ausgebildet ist, und ein zweites elastisches Element (36B), das von dem ersten elastischen Element getrennt ist und in dem der zweite vorstehende Abschnitt (38) ausgebildet ist.

7. Wasserdichte Kappe nach einem der Ansprüche 1 bis 6, wobei der zweite vorstehende Abschnitt (38) den gesamten Umfang der äußeren Umfangsfläche des Kappenkörpers kontinuierlich umgibt, während er von der äußeren Umfangsfläche des Kappenkörpers in einer Ebene orthogonal zur Steckrichtung vorsteht.

8. Wasserdichte Kappe nach Anspruch 7, wobei, bei Betrachtung in einer Richtung orthogonal zur Steckrichtung, ein maximaler Abstand (L1X, L1Z) zwischen gegenüberliegenden Enden des ersten vorstehenden Abschnitts (37), der den gesamten Umfang der äußeren Umfangsfläche des Kappenkörpers kontinuierlich umgibt, größer ist als ein maximaler Abstand (L2X, L2Z) zwischen entgegengesetzten Enden des zweiten vorstehenden Abschnitts (38), der den gesamten Umfang der äußeren Umfangsfläche des Kappenkörpers kontinuierlich umgibt.

9. Wasserdichte Kappe nach einem der Ansprüche 1 bis 8, umfassend
einen Flanschabschnitt (33), der mit einem hinteren Ende des Kappenkörpers entlang der Steckrichtung verbunden ist und sich länger als der Kappenkörper in einer Richtung orthogonal zur Steckrichtung erstreckt.

10. Wasserdichte Kappe nach Anspruch 9, wobei, bei Betrachtung in einer Richtung orthogonal zur Steckrichtung, eine maximale Abmessung (L3X, L3Z) des Flanschabschnitts (33) größer ist als ein maximaler Abstand (L1X, L1Z) zwischen entgegengesetzten Enden des ersten vorstehenden Abschnitts (37), der den gesamten Umfang der äußeren Umfangsfläche des Kappenkörpers kontinuierlich umgibt.

11. Wasserdichte Kappe nach Anspruch 9 oder 10, umfassend
einem Knopfteil (34), der mit einem hinteren Ende des Flanschteils (33) entlang der Steckrichtung verbunden ist.

12. Verbinderanordnung, umfassend:
einen Verbinder (21), der entlang einer Steckrichtung (D) an einem Gegenverbinder angebracht ist;
ein Gehäuse (11) einer elektronischen Vorrichtung, wobei das Gehäuse den Verbinder aufnimmt und eine Einführungsöffnung (12) aufweist, in die der Gegenverbinder eingeführt wird; und
eine wasserdichte Kappe (31, 31A) nach einem der Ansprüche 1 bis 11, die von der Außenseite des Gehäuses her abnehmbar am Gehäuse angebracht ist und zum Verschließen der Einführungsöffnung verwendet wird.

13. Die Verbinderanordnung nach Anspruch 12,
wobei der Verbinder (21) mindestens einen Verbindungsanschluss (22) aufweist, der mit einem Verbindungsanschluss des Gegenverbinders verbunden ist, wenn er mit dem Gegenverbinder zusammengesteckt ist, und
wobei der Kappenkörper (32, 32A) einen vertieften Abschnitt (35) aufweist, der vom vorderen Ende des Kappenkörpers zu einem hinteren Abschnitt des Kappenkörpers hin vertieft ist und den mindestens einen Verbindungsanschluss des Verbinders aufnimmt.

14. Die Verbinderanordnung nach Anspruch 12 oder 13,
wobei der Verbinder (21) ein Steckelement (24) enthält, in dem ein Gegenverbinder-Aufnahmeabschnitt (26) mit vertiefter Form zur Aufnahme des Gegenverbinders ausgebildet ist, und
wobei, wenn die wasserdichte Kappe an dem Gehäuse angebracht ist, der zweite vorstehende Abschnitt (38) in den den Gegenverbinder aufnehmenden Abschnitt (26) des Verbindungselements eingeführt ist und mindestens zwei einander gegenüberliegende Oberflächen (27, 28) des Verbindungselements berührt, während er elastisch zusammengedrückt wird.

15. Verbinderanordnung nach Anspruch 14, wobei das Verbindungselement aus einer Metallschale (24) besteht.

## Revendications

1. Capuchon étanche à l'eau (31, 31A) qui peut être fixé de manière détachable, depuis l'extérieur d'un boîtier (11) d'un dispositif électronique, au boîtier et qui ferme un orifice d'insertion, ledit boîtier logeant un connecteur (21) accouplé à un connecteur complémentaire le long d'une direction d'accouplement (D) et présentant l'orifice d'insertion (12) dans lequel le connecteur complémentaire est inséré, le capuchon étanche à l'eau comprenant :
un corps de capuchon (32, 32A) s'étendant dans la direction d'accouplement,
une première partie faisant saillie (37) disposée sur une surface périphérique extérieure du corps de capuchon, entourant de manière continue toute la périphérie de la surface périphérique extérieure tout en faisant saillie depuis la surface périphérique extérieure dans un plan perpendiculaire à la direction d'accouplement, et fabriquée en un matériau élastique ; et
dans lequel, quand le capuchon étanche à l'eau est fixé au boîtier, la première partie faisant saillie (37) est ajustée avec serrage dans l'orifice d'insertion (12) du boîtier et est en contact avec toute une périphérie d'une surface périphérique intérieure de l'orifice d'insertion tout en étant comprimée de manière élastique,
**caractérisé en ce que** le capuchon étanche à l'eau comprend en outre une seconde partie faisant saillie (38) disposée sur la surface périphérique extérieure sur un côté d'extrémité avant du corps de capuchon dans la direction d'accouplement depuis une position dans laquelle la première partie faisant saillie est disposée, faisant saillie depuis la surface périphérique extérieure dans une direction perpendiculaire à la direction d'accouplement et constituée d'un élément élastique, la seconde partie faisant saillie (38) étant conçue pour être insérée dans le connecteur et étant en contact avec au moins deux surfaces intérieures (27, 28) du connecteur se faisant face, tout en étant comprimée de manière élastique.

2. Capuchon étanche à l'eau selon la revendication 1, dans lequel le corps de capuchon (32, 32A) comporte une partie évidée (35) qui est évidée depuis l'extrémité avant du corps de capuchon vers une partie arrière du corps de capuchon.

3. Capuchon étanche à l'eau selon la revendication 2, dans lequel la partie évidée (35) est disposée dans une position dans laquelle la partie évidée chevauche la seconde partie faisant saillie (38) dans la direction d'accouplement.

4. Capuchon étanche à l'eau selon l'une quelconque des revendications 1 à 3,
dans lequel le corps de capuchon (32, 32A) est constitué de résine isolante, et
dans lequel la première partie faisant saillie et la seconde partie faisant saillie sont chacune constituées d'un matériau caoutchouteux.

5. Capuchon étanche à l'eau selon la revendication 4, comprenant un élément élastique dans lequel la première partie faisant saillie (37) et la seconde partie faisant saillie (38) sont formées d'un seul tenant.

6. Capuchon étanche à l'eau selon la revendication 4, comprenant un premier élément élastique (36A) dans lequel la première partie faisant saillie (37) est formée et un second élément élastique (36B) qui est séparé du premier élément élastique et dans lequel la seconde partie faisant saillie (38) est formée.

7. Capuchon étanche à l'eau selon l'une quelconque des revendications 1 à 6, dans lequel la seconde partie faisant saillie (38) entoure de manière continue toute la périphérie de la surface périphérique extérieure du corps de capuchon, tout en faisant saillie depuis la surface périphérique extérieure du corps de capuchon dans un plan perpendiculaire à la direction d'accouplement.

8. Capuchon étanche à l'eau selon la revendication 7, dans lequel, vue dans une direction perpendiculaire à la direction d'accouplement, une distance maximale (L1X, L1Z) entre des extrémités opposées de la première partie faisant saillie (37) entourant de manière continue toute la périphérie de la surface périphérique extérieure du corps de capuchon est supérieure à une distance maximale (L2X, L2Z) entre des extrémités opposées de la seconde partie faisant saillie (38) entourant de manière continue toute la périphérie de la surface périphérique extérieure du corps de capuchon.

9. Capuchon étanche à l'eau selon l'une quelconque des revendications 1 à 8, comprenant
une partie de bord (33) reliée à une extrémité arrière du corps de capuchon le long de la direction d'accouplement et s'étendant sur une plus grande longueur que le corps de capuchon dans une direction perpendiculaire à la direction d'accouplement.

10. Capuchon étanche à l'eau selon la revendication 9, dans lequel, vue dans une direction perpendiculaire à la direction d'accouplement, une dimension maximale (L3X, L3Z) de la partie de bord (33) est supérieure à une distance maximale (L1X, L1Z) entre des extrémités opposées de la première partie faisant saillie (37) entourant de manière continue toute la périphérie de la surface périphérique extérieure du corps de capuchon.

11. Capuchon étanche à l'eau selon la revendication 9 ou 10, comprenant
une partie formant bouton (34) reliée à une extrémité arrière de la partie de bord (33) le long de la direction d'accouplement.

12. Ensemble connecteur comprenant :
un connecteur (21) accouplé à un connecteur complémentaire le long d'une direction d'accouplement (D) ;
un boîtier (11) d'un dispositif électrique, le boîtier logeant le connecteur et présentant un orifice d'insertion (12) dans lequel le connecteur complémentaire est inséré ; et
un capuchon étanche à l'eau (31, 31A) selon l'une quelconque des revendications 1 à 11, fixé au boîtier de manière détachable depuis l'extérieur du boîtier et utilisé pour fermer l'orifice d'insertion.

13. Ensemble connecteur selon la revendication 12,
dans lequel le connecteur (21) présente au moins une borne de connexion (22) connectée à une borne de connexion du connecteur complémentaire quand il est pourvu du connecteur complémentaire, et
dans lequel le corps de capuchon (32, 32A) comporte une partie évidée (35) qui est évidée depuis l'extrémité avant du corps de capuchon vers une partie arrière du corps de capuchon et qui loge l'au moins une borne de connexion du connecteur.

14. Ensemble connecteur selon la revendication 12 ou 13,
dans lequel le connecteur (21) comporte un élément d'accouplement (24) dans lequel est formée une partie de réception de connecteur complémentaire (26) de forme évidée et destinée à recevoir le connecteur complémentaire, et
dans lequel, quand le capuchon étanche à l'eau est fixé au boîtier, la seconde partie faisant saillie (38) est insérée dans la partie de réception de connecteur complémentaire (26) de l'élément d'accouplement et est en contact avec au moins deux surfaces (27, 28) de l'élément d'accouplement se faisant face, tout en étant compressée de manière élastique.

15. Ensemble connecteur selon la revendication 14, dans lequel l'élément d'accouplement est constitué d'une coque métallique (24) .
